# EUROPEAN PATENT APPLICATION

(11) **EP 4 844 748 A1**
(43) Date of publication of application: **25.11.2026**
(21) Application number: 25762284.5
(22) Date of filing: 08.01.2025
(51) Int. Cl.: G10L 15/22, G10L 15/02, G10L 25/51, G06F 40/279, G10L 15/16, G10L 15/06, G10L 15/08

(54) **ELECTRONIC APPARATUS AND CONTROL METHOD THEREOF**

(30) Priority: 29.02.2024 KR 20240030066; 25.06.2024 KR 20240082848
(71) Applicant: Samsung Electronics Co., Ltd., Suwon-si, Gyeonggi-do 16677 (KR)
(72) Inventor: JIN, Sichen, Suwon-si Gyeonggi-do 16677 (KR); ROH, Jaeyoung, Suwon-si Gyeonggi-do 16677 (KR); LEE, Seungjin, Suwon-si Gyeonggi-do 16677 (KR); JUNG, Youngmoon, Suwon-si Gyeonggi-do 16677 (KR)
(74) Representative: Appleyard Lees IP LLP
(86) International application number: PCT/KR2025/000454
(87) International publication number: WO 2025/183349

(57) **Abstract**

An electronic apparatus and a control method thereof are disclosed. In particular, the electronic apparatus may include a microphone, memory 120 storing at least one instruction, and a processor configured to execute the at least one instruction. The processor may be configured to, based on a voice signal being received through the microphone, input each of frames included in the voice signal into a character identifier to obtain a first score indicating a probability that the voice signal corresponds to a pre-registered keyword, input each of the frames into a voice encoder to obtain a voice feature vector indicating a feature of the voice signal, input the first score, the voice feature vector, and a text feature vector indicating a feature of the keyword into a keyword detector to identify whether the voice signal includes the keyword, and based on identifying that the voice signal includes the keyword, activate a voice recognition function of the electronic apparatus.

## Description

### Technical Field

The present disclosure relates to an electronic apparatus and a control method of the electronic apparatus, and more particularly, to an electronic apparatus capable of detecting a keyword for activating a voice recognition function and a control method thereof.

### Background Art

Recently, according to the development of technologies related to artificial intelligence (AI), technologies related to voice recognition using a voice recognition model have been rapidly developed.

However, since a large amount of data and a large amount of computation are required for high accuracy of the voice recognition model, excessive power consumption may be caused when the voice recognition model is always activated. Accordingly, recently, a technology has been used in which the voice recognition model is maintained in a standby state and activation of the voice recognition model is determined when a user utters a pre-registered keyword.

Among prior art technologies related to keyword spotting (KWS), there exists a technology for registering a keyword by causing a user to utter a keyword desired to be registered multiple times, but such technology may cause inconvenience to the user because multiple utterances of the user are required, and has been pointed out as having a limitation in that an inaccurate keyword may be input.

Meanwhile, among prior art technologies, there exists a non-streaming type keyword spotting technology for identifying whether a keyword has been uttered within a preset utterance section (e.g., 1.3 seconds). Such prior art technology has excellent performance because the entirety of the keyword together with preceding and following context is considered, but has a limitation in that a large amount of computation is required because a voice signal of a long utterance section should be processed by the model at one time.

In addition, in the case of the non-streaming type keyword spotting technology, there are limitations in that it is difficult to recognize a keyword uttered in a section exceeding the size of the utterance section, noise may be excessively included when detecting a keyword uttered in a section shorter than the size of the utterance section, and the non-streaming type requires start and end points of an utterance to be known.

Accordingly, there is a need for a technology capable of effectively comparing a registered keyword with a user voice received in real time even when a user registers the keyword through text input, and efficiently detecting the keyword by processing one frame (e.g., 25 ms) in real time at a time according to a streaming method.

### Disclosure of Invention

### Solution to Problem

The present disclosure is to overcome the limitations of the prior art technologies as described above by providing an electronic apparatus capable of detecting a keyword for activating a voice recognition function in an effective and efficient manner and a control method thereof.

An electronic apparatus according to one or more embodiments includes a microphone, memory storing at least one instruction, and a processor configured to execute the at least one instruction, and the processor is configured to, based on a voice signal being received through the microphone, input each of frames included in the voice signal into a character identifier to obtain a first score indicating a probability that the voice signal corresponds to a pre-registered keyword, input each of the frames into a voice encoder to obtain a voice feature vector indicating a feature of the voice signal, input the first score, the voice feature vector, and a text feature vector indicating a feature of the keyword into a keyword detector to identify whether the voice signal includes the keyword, and based on identifying that the voice signal includes the keyword, activate a voice recognition function of the electronic apparatus.

The processor may be configured to, based on receiving a user input for inputting text corresponding to the keyword, input the text into a text encoder to obtain the text feature vector, and store the text feature vector in the memory.

The processor may be configured to input each of the frames into the character identifier and the voice encoder whenever each of the frames is received, and the character identifier may be configured to obtain probability information regarding probabilities that each of the frames corresponds to each of a plurality of characters included in the keyword, identify, based on the probability information, characters having highest probabilities of corresponding to the respective frames among the plurality of characters for each of the frames, and obtain the first score by accumulating probabilities corresponding to the identified characters.

The character identifier may be configured to identify, for each of the frames, characters having highest probabilities of corresponding to the respective frames among the plurality of characters by updating, based on the probability information, information regarding probabilities that frames input up to a current time among the frames include a frame corresponding to each of the plurality of characters.

The voice feature vector may include a plurality of first voice feature vectors indicating features of the respective frames and a plurality of second voice feature vectors indicating features of the respective identified characters, and the voice encoder may be configured to obtain the plurality of first voice feature vectors by obtaining, whenever each of the frames is input, the first voice feature vector indicating a feature of each of the frames.

The keyword detector may be configured to obtain a second score indicating similarity between the voice feature vector and the text feature vector, obtain a weighted sum of the first score and the second score, and based on the weighted sum being greater than or equal to a preset threshold value, identify that the voice signal includes the keyword.

The keyword detector may be configured to obtain a plurality of second voice feature vectors by combining, among the plurality of first voice feature vectors, first voice feature vectors for which the identified characters are identical, based on information regarding the identified characters and information regarding times at which the respective frames are received.

The text feature vector may include a plurality of character feature vectors indicating a features of each of the plurality of characters, and the keyword detector may be configured to obtain the second score by comparing the plurality of second voice feature vectors with the plurality of character feature vectors for corresponding characters.

Each of the character identifier, the voice encoder, and the text encoder may include a plurality of neural networks, and the processor may be configured to obtain a loss value based on the first score and the second score, and train at least one of the character identifier, the voice encoder, or the text encoder based on the loss value.

A size of each of the frames may be determined within a range of 20 ms to 40 ms.

A control method of an electronic apparatus according to one or more embodiments includes, based on a voice signal being received through a microphone, inputting each of frames included in the voice signal into a character identifier to obtain a first score indicating a probability that the voice signal corresponds to a pre-registered keyword, inputting each of the frames into a voice encoder to obtain a voice feature vector indicating a feature of the voice signal, inputting the first score, the voice feature vector, and a text feature vector indicating a feature of the keyword into a keyword detector to identify whether the voice signal includes the keyword, and based on identifying that the voice signal includes the keyword, activating a voice recognition function of the electronic apparatus.

The method may further include, based on receiving a user input for inputting text corresponding to the keyword, inputting the text into a text encoder to obtain the text feature vector, and storing the text feature vector in the memory.

The obtaining a first score may include inputting each of the frames into the character identifier whenever each of the frames is received, the obtaining a voice feature vector may include inputting each of the frames into the voice encoder whenever each of the frames is received, and the character identifier may be configured to obtain probability information regarding probabilities that each of the frames corresponds to each of a plurality of characters included in the keyword, identify, based on the probability information, characters having highest probabilities of corresponding to the respective frames among the plurality of characters for each of the frames, and obtain the first score by accumulating probabilities corresponding to the identified characters.

The character identifier may be configured to identify, for each of the frames, characters having highest probabilities of corresponding to the respective frames among the plurality of characters by updating, based on the probability information, information regarding probabilities that frames input up to a current time among the frames include a frame corresponding to each of the plurality of characters.

The voice feature vector may include a plurality of first voice feature vectors indicating features of the respective frames and a plurality of second voice feature vectors indicating features of the respective identified characters, and the voice encoder may be configured to obtain the plurality of first voice feature vectors by obtaining, whenever each of the frames is input, the first voice feature vector indicating a feature of each of the frames.

The keyword detector may be configured to obtain a second score indicating similarity between the voice feature vector and the text feature vector, obtain a weighted sum of the first score and the second score, and based on the weighted sum being greater than or equal to a preset threshold value, identify that the voice signal includes the keyword.

The keyword detector may be configured to obtain a plurality of second voice feature vectors by combining, among the plurality of first voice feature vectors, first voice feature vectors for which the identified characters are identical, based on information regarding the identified characters and information regarding times at which the respective frames are received.

The text feature vector may include a plurality of character feature vectors indicating a features of each of the plurality of characters, and the keyword detector may be configured to obtain the second score by comparing the plurality of second voice feature vectors with the plurality of character feature vectors for corresponding characters.

Each of the character identifier, the voice encoder, and the text encoder may include a plurality of neural networks, and the processor may be configured to obtain a loss value based on the first score and the second score, and train at least one of the character identifier, the voice encoder, or the text encoder based on the loss value.

In a non-transitory computer-readable recording medium including a program that executes a control method of an electronic apparatus according to one or more embodiments, a control method of the electronic apparatus includes based on a voice signal being received through a microphone, inputting each of frames included in the voice signal into a character identifier to obtain a first score indicating a probability that the voice signal corresponds to a pre-registered keyword, inputting each of the frames into a voice encoder to obtain a voice feature vector indicating a feature of the voice signal, inputting the first score, the voice feature vector, and a text feature vector indicating a feature of the keyword into a keyword detector to identify whether the voice signal includes the keyword, and based on identifying that the voice signal includes the keyword, activating a voice recognition function of the electronic apparatus.

### Brief Description of Drawings

Other aspects, features, and advantages of one or more embodiments according to the present disclosure will become more apparent from the following detailed description in conjunction with the accompanying drawings.
FIG. 1 is a view schematically illustrating a configuration of an electronic apparatus according to one or more embodiments;
FIG. 2 is a view illustrating a plurality of modules according to one or more embodiments;
FIG. 3 is a view illustrating a plurality of modules according to one or more embodiments;
FIG. **4** is a view provided to explain in detail a process of obtaining a first score and a second score according to one or more embodiments;
FIG. 5 is a view illustrating in detail a configuration of an electronic apparatus according to one or more embodiments; and
FIG. 6 is a flowchart illustrating a control method of an electronic apparatus according to one or more embodiments.

### Mode for Invention

The present disclosure may be variously modified and have several embodiments, and specific embodiments of the present disclosure are thus illustrated in the accompanying drawings and described in detail in the specification. However, it should be understood that the scope of the present disclosure are not limited to specific embodiments, and include all modifications, equivalents, and alternatives according to an embodiment of the present disclosure. Throughout the accompanying drawings, similar components may be denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (e.g., a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

On the other hand, when any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or spacing illustrated in the accompanying drawings.

Meanwhile, an electronic apparatus according to various embodiments of the present disclosure may include, for example, at least one of a smartphone, a tablet PC, a desktop PC, a laptop PC, or a wearable device. The wearable device may include at least one of an accessory-type device (e.g., a watch, a ring, a bracelet, an anklet, a necklace, glasses, contact lenses, or a head-mounted device (HMD)), a fabric- or clothing-integrated device (e.g., electronic clothing), a body-attached device (e.g., a skin pad or tattoo), or a bio-implantable circuit.

In some embodiments, the electronic apparatus may include, for example, at least one of a television, a digital video disk (DVD) player, audio equipment, a refrigerator, an air conditioner, a cleaner, an oven, a microwave oven, a washing machine, an air purifier, a set-top box, a home automation control panel, a security control panel, a media box (e.g., Samsung HomeSync^{™}, Apple TV^{™}, or Google TV^{™}), a game console (e.g., Xbox^{™} or PlayStation^{™}), an electronic dictionary, an electronic key, a camcorder, or an electronic photo frame.

In another embodiment, the electronic apparatus may include at least one of various medical devices (e.g., various portable medical measurement devices such as a blood glucose meter, a heart rate meter, a blood pressure meter, or a body temperature meter, magnetic resonance angiography (MRA), magnetic resonance imaging (MRI), computed tomography (CT), an imaging device, or an ultrasonic device), a navigation device, a global navigation satellite system (GNSS), an event data recorder (EDR), a flight data recorder (FDR), an automotive infotainment device, electronic equipment for a ship (e.g., a navigation device for a ship, a gyrocompass, etc.), avionics, a security device, a head unit for a vehicle, an industrial or household robot, a drone, an automated teller machine (ATM) of a financial institution, a point of sales (POS) device of a store, or an Internet of Things device (e.g., a light bulb, various sensors, a sprinkler device, a fire alarm, a thermostat, a streetlight, a toaster, exercise equipment, a hot water tank, a heater, a boiler, etc.).

Hereinafter, embodiments according to the present disclosure will be described in detail with reference to the accompanying drawings so that a person having ordinary skill in the art to which the present disclosure pertains can easily implement the embodiments.

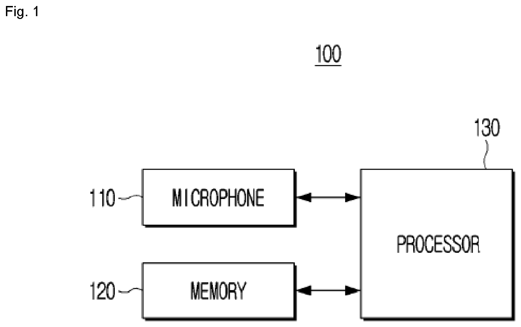

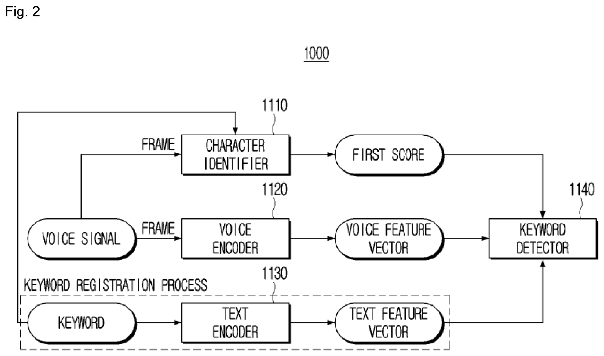

FIG. 1 is a view schematically illustrating a configuration of an electronic apparatus 100 according to one or more embodiments. In addition, FIG. 2 is a view illustrating a plurality of modules according to one or more embodiments. Hereinafter, descriptions are provided with reference to FIGS. 1 and 2 together.

As illustrated in FIG. 1, the electronic apparatus 100 may include a microphone 110, memory 120, and a processor 130.

The microphone 110 may obtain a signal for a sound or voice generated outside the electronic apparatus 100. Specifically, the microphone 110 may obtain vibration according to the sound or voice generated outside the electronic apparatus 100, and convert the obtained vibration into an electrical signal.

In particular, the microphone 110 according to the present disclosure may obtain a voice signal for a user voice generated by a user's utterance. In addition, the obtained signal may be converted into a digital signal and stored in the memory 120. The microphone 110 may include an Analog to Digital Converter (A/D converter), and may also operate in conjunction with an A/D converter located outside the microphone 110.

According to one or more embodiments, the processor 130 may receive a voice signal corresponding to a user voice through the microphone 110 in units of preset frames. A "frame" refers to a portion obtained by dividing the voice signal into a preset size, that is, a time length. Here, the preset size, that is, the size of each of the frames, may be determined within a range of 20 ms to 40 ms. The processor 130 may continuously receive the frames through the microphone 110 at each time according to the size of the frame, and the continuously received frames may constitute the voice signal.

At least one instruction related to the electronic apparatus 100 may be stored in the memory 120. In addition, an Operating System (O/S) for driving the electronic apparatus 100 may be stored in the memory 120. Further, various software programs or applications for operating the electronic apparatus 100 according to various embodiments of the present disclosure may be stored in the memory 120. In addition, the memory 120 may include semiconductor memory 120 such as a Flash Memory or a magnetic storage medium such as a hard disk.

Specifically, various software modules for operating the electronic apparatus 100 according to various embodiments of the present disclosure may be stored in the memory 120, and the processor 130 may control operations of the electronic apparatus 100 by executing the various software modules stored in the memory 120. In other words, the memory 120 may be accessed by the processor 130, and reading/writing/modification/deletion/update of data by the processor 130 may be performed.

Meanwhile, in the present disclosure, the term "memory 120" may be used to include a ROM, a RAM in the processor 130, or a memory card (e.g., a micro SD card or a memory stick) mounted in the electronic apparatus 100.

According to one or more embodiments, various information/data such as a pre-registered keyword, a feature vector indicating a feature of the keyword, a voice signal and frames of the voice signal, a voice feature vector, a text feature vector, a first score, and a second score may be stored in the memory 120.

Data for a plurality of modules according to the present disclosure may be stored in the memory 120. In addition, when at least one among the plurality of modules is implemented as a neural network model, data for the neural network model may be stored in the memory 120.

In addition, various information necessary within a range for achieving the purpose of the present disclosure may be stored in the memory 120, and information stored in the memory 120 may be updated as the information is received from an external apparatus or input by a user.

The processor 130 controls overall operations of the electronic apparatus 100. Specifically, the processor 130 is connected with a configuration of the electronic apparatus 100 including the microphone 110 and the memory 120, and may control overall operations of the electronic apparatus 100 by executing at least one instruction stored in the memory 120 as described above. The processor 130 may include one processor or two or more processors.

The processor 130 may be implemented in various ways. For example, the processor 130 may be implemented as at least one among an Application Specific Integrated Circuit (ASIC), an embedded processor, a microprocessor, hardware control logic, a hardware Finite State Machine (FSM), and a Digital Signal Processor (DSP). Meanwhile, in the present disclosure, the term "processor 130" may be used to include a Central Processing Unit (CPU), a Graphic Processing Unit (GPU), and a Micro Processor Unit (MPU).

According to one or more embodiments, the processor 130 may identify whether the voice signal corresponds to a pre-registered keyword, and determine whether to activate a voice recognition function according to an identification result. The processor 130 may determine whether to activate the voice recognition function by using the plurality of modules.

The plurality of modules may be software modules or hardware modules. When at least one module among the plurality of modules is implemented as a software module, the memory 120 may store data for the at least one module, and the processor 130 may load the data stored in the memory 120 to perform operations of the plurality of modules. When at least one module among the plurality of modules is implemented as a hardware module, the at least one module may be integrated into the processor 130 in an on-chip manner. The plurality of modules may be implemented on-device by the processor 130 of the electronic apparatus 100, and at least one among the plurality of modules may be implemented by an external apparatus such as a server.

At least one among the plurality of modules may include a neural network, and two or more among the plurality of modules may be integrated into one neural network model. When two or more among the plurality of modules are integrated into one neural network model, the two or more modules may be jointly trained. Here, the neural network model may be a Wake on Voice (WoV) model trained to determine whether to activate the voice recognition function, and there is no particular limitation on a type or structure of a neural network constituting the neural network model.

As illustrated in FIG. 2, the plurality of modules may include a character identifier 1110, a voice encoder 1120, a text encoder 1130, and a keyword detector 1140. Operations performed by each of the plurality of modules are described below in various embodiments implemented by the processor 130.

The processor 130 may receive a voice signal through the microphone 110. Specifically, when a user utters a voice, the processor 130 may receive a voice signal corresponding to the uttered voice through the microphone 110 in units of frames. Meanwhile, the processor 130 may also receive a voice signal from an external apparatus through a communication interface 140. However, hereinafter, for convenience of description, various embodiments are described on the assumption that the processor 130 receives the voice signal through the microphone 110.

The processor 130 may input each of the frames included in the voice signal into the character identifier 1110 and obtain a first score indicating a probability that the voice signal corresponds to a pre-registered keyword. As illustrated in FIG. 2, whenever each of the frames included in the voice signal is received, the processor 130 may input each of the frames into the character identifier 1110.

A "keyword" refers to a word registered as a word for activating a voice recognition function of the electronic apparatus 100. The term "keyword" may be replaced with terms such as "wake on word," "wake-up word," and "trigger word." The keyword may be determined according to a developer's selection, and may also be registered according to a user input.

In particular, the keyword according to the present disclosure may be registered based on a user input for inputting text corresponding to the keyword. Although the present disclosure is described on the assumption that the keyword is registered by the user's text input, the present disclosure is not limited thereto. The keyword may be registered based on a user voice uttering a voice corresponding to the keyword. In this case, the processor 130 may obtain text corresponding to the user voice by using a voice recognition model included in the electronic apparatus 100 or an external apparatus such as a server, and may register the keyword based on the obtained text.

A "character identifier 1110" refers to a module capable of identifying characters corresponding to each of the frames included in the voice signal. The character identifier 1110 may include a neural network, and may be trained to identify characters corresponding to each of the frames included in the voice signal. As illustrated in FIG. 2, when each of the frames included in the voice signal is input, the first score may be output.

In the present disclosure, a "character" refers to each of a plurality of characters included in the keyword. For example, when the keyword is "CAT," the plurality of characters included in the keyword may be "C," "A," and "T." The term "character" may be replaced with a term such as "token."

The "first score" may indicate a probability that the voice signal corresponds to the pre-registered keyword. In other words, the first score may indicate a probability that a user uttering a voice corresponding to the voice signal has uttered all of the plurality of characters included in the keyword.

For example, when, in the case of first to fifth frames, a probability corresponding to the character "C" is higher than probabilities corresponding to the characters "A" and "T," in the case of sixth to tenth frames, a probability corresponding to the character "A" is higher than probabilities corresponding to the characters "C" and "T," and in the case of eleventh to fifteenth frames, a probability corresponding to the character "T" is higher than probabilities corresponding to the characters "C" and "A," the processor 130 may obtain the first score by accumulating probabilities that each of the first to fifth frames corresponds to the character "C," probabilities that each of the sixth to tenth frames corresponds to the character "A," and probabilities that each of the eleventh to fifteenth frames corresponds to the character "T." Here, accumulating the probabilities may mean adding all of the probabilities or multiplying all of the probabilities, and various other operations may be added.

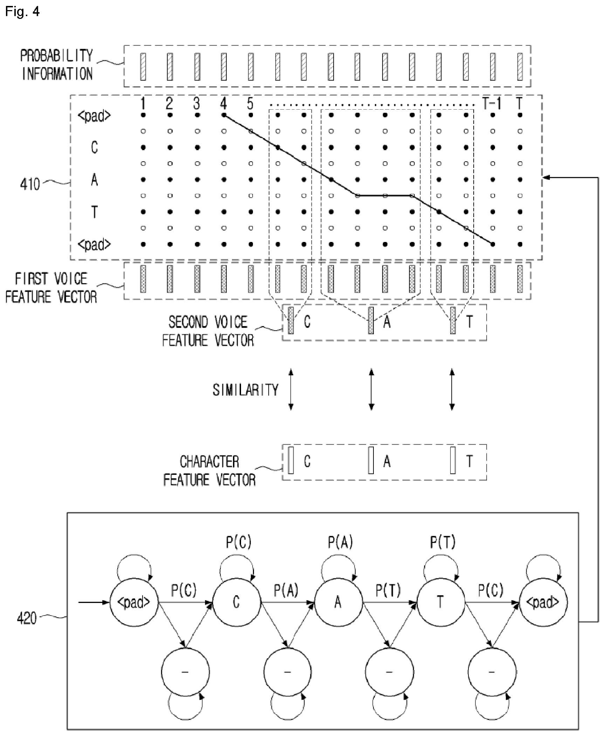

Specifically, the character identifier 1110 may obtain probability information regarding probabilities that each of the input frames corresponds to each of the plurality of characters included in the keyword, and may obtain the first score based on the obtained probability information. A more detailed process related to obtaining the first score by the character identifier 1110 is described below in greater detail with reference to FIG. **4****.**

The processor 130 may input each of the frames into the voice encoder 1120 and obtain a voice feature vector indicating a feature of the voice signal. As illustrated in FIG. 2, whenever each of the frames included in the voice signal is received, the processor 130 may input each of the frames into the voice encoder 1120.

The term "voice feature vector" may collectively refer to vectors indicating features of the voice signal. Hereinafter, the term "vector" may be replaced with terms such as "embedding" or "tensor." In the present disclosure, the voice feature vector may include a plurality of first voice feature vectors indicating features of respective frames and a plurality of second voice feature vectors indicating features of respective characters identified through the character identifier 1110. The first voice feature vectors may be referred to as "frame-level voice feature vectors," and the second voice feature vectors may be referred to as "character-level voice feature vectors."

A "voice encoder 1120" refers to a module capable of obtaining a feature of a voice signal. The voice encoder 1120 may include a neural network, and may be trained to obtain a voice feature vector indicating a feature of an input voice signal. As illustrated in FIG. 2, when each of the frames included in the voice signal is input, the voice encoder 1120 may obtain a voice feature vector indicating a feature of the voice signal.

Specifically, the voice encoder 1120 may obtain a plurality of first voice feature vectors by obtaining, whenever each of the frames is input, a first voice feature vector indicating a feature of each of the frames.

The second voice feature vectors may be obtained through the keyword detector 1140, and thus a process of obtaining the second voice feature vectors is described later.

The processor 130 may identify whether the voice signal includes the keyword by inputting the first score, the voice feature vector, and a text feature vector indicating a feature of the keyword into the keyword detector 1140. Since the first score and the voice feature vector have been described above, a process of obtaining the text feature vector is first described below, and then a process of identifying whether the voice signal includes the keyword is described.

The term "text feature vector" may collectively refer to vectors indicating features of a pre-registered keyword. A "text encoder 1130" refers to a module capable of obtaining a feature of input text. The text encoder 1130 may include a neural network, and may be trained to obtain a text feature vector indicating a feature of the input text. As illustrated in FIG. 2, when a keyword is input, the text encoder 1130 may obtain a text feature vector indicating a feature of the keyword.

Specifically, the text encoder 1130 may obtain a plurality of character feature vectors (that is, character-level text feature vectors) indicating features of respective characters included in the keyword, and may also obtain one text feature vector indicating a feature of the entirety of the keyword. For example, when a pre-registered keyword is "CAT," the text encoder 1130 may obtain a character feature vector indicating a feature of the character "C," a character feature vector indicating a feature of the character "A," and a character feature vector indicating a feature of the character "T."

As illustrated in FIG. 2, a process of obtaining the text feature vector by the text encoder 1130 may be performed during a keyword registration process. Specifically, when a user input for inputting text corresponding to the keyword is received, the processor 130 may input the text corresponding to the keyword into the text encoder 1130 and obtain the text feature vector. In addition, the processor 130 may store the obtained text feature vector in the memory 120.

A "keyword detector 1140" refers to a module capable of detecting a keyword included in a voice signal. The keyword detector 1140 may include a neural network, and may be trained to detect a keyword included in the voice signal. When the first score obtained through the character identifier 1110, the voice feature vector obtained through the voice encoder 1120, and the text feature vector obtained through the text encoder 1130 are input, the keyword detector 1140 may identify whether the voice signal includes the keyword by using the first score, the voice feature vector, and the text feature vector together, and may output an identification result.

Specifically, the keyword detector 1140 may obtain a second score indicating similarity between the voice feature vector and the text feature vector. The keyword detector 1140 may identify whether the voice signal includes the keyword based on the first score and the second score. For example, the keyword detector 1140 may obtain a weighted sum of the first score and the second score, and when the obtained weighted sum is greater than or equal to a preset threshold value, may identify that the voice signal includes the keyword. On the other hand, when the obtained weighted sum is less than the preset threshold value, the keyword detector 1140 may identify that the voice signal does not include the keyword.

Meanwhile, when the obtained weighted sum is less than a first threshold value preset as a criterion indicating that the voice signal includes the keyword, but is greater than or equal to a second threshold value preset to be lower than the first threshold value, the processor 130 may identify that whether the voice signal includes the keyword is unclear, and may provide a message requesting re-utterance to the user.

Here, similarity between the voice feature vector and the text feature vector may be calculated by various methods such as cosine similarity, Euclidean distance, or Jaccard similarity.

The keyword detector 1140 may calculate similarity by comparing one voice feature vector indicating a feature of the voice signal and one text feature vector indicating a feature of the keyword, and may also calculate similarity by comparing several vectors with one another.

Specifically, the keyword detector 1140 may obtain a plurality of second voice feature vectors by combining, among the plurality of first voice feature vectors, first voice feature vectors for which identified characters are identical based on information regarding characters identified through the character identifier 1110 and information regarding times at which respective frames are received. As described above, the plurality of voice feature vectors may indicate features of respective characters identified through the character identifier 1110.

For example, when first to fifth frames correspond to the character "C," sixth to tenth frames correspond to the character "A," and eleventh to fifteenth frames correspond to the character "T," the keyword detector 1140 may obtain a second voice feature vector corresponding to the character "C" by combining first voice feature vectors corresponding to respective ones of the first to fifth frames. In this case, the keyword detector 1140 may obtain a second voice feature vector corresponding to the character "A" by combining first voice feature vectors corresponding to respective ones of the sixth to tenth frames, and may obtain a second voice feature vector corresponding to the character "T" by combining first voice feature vectors corresponding to respective ones of the eleventh to fifteenth frames.

When the plurality of second voice feature vectors are obtained as described above, the keyword detector 1140 may obtain the second score by comparing the plurality of second voice feature vectors (that is, character-level voice feature vectors) with the plurality of character feature vectors (that is, character-level text feature vectors) for corresponding characters. Here, the plurality of character feature vectors refer to vectors indicating features of respective characters included in the keyword, as described above.

For example, the keyword detector 1140 may calculate a first similarity value by comparing the second voice feature vector corresponding to the character "C" and a character feature vector indicating a feature of the character "C," may calculate a second similarity value by comparing the second voice feature vector corresponding to the character "A" and a character feature vector indicating a feature of the character "A," and may calculate a third similarity value by comparing the second voice feature vector corresponding to the character "T" and a character feature vector indicating a feature of the character "T." In addition, the keyword detector 1140 may obtain the second score by performing an operation such as a sum or a weighted sum based on the first similarity value, the second similarity value, and the third similarity value.

When it is identified that the voice signal includes the keyword, the processor 130 may activate the voice recognition function of the electronic apparatus 100. On the other hand, when it is identified that the voice signal does not include the keyword, the processor 130 may maintain a state in which the voice recognition function is not activated.

Activation of the voice recognition function refers to causing a voice recognition model to start operating so as to enter a ready state capable of detecting a user voice and obtaining text corresponding to the user voice. Since the voice recognition model requires a large amount of computation and a large amount of data, considerable power may be consumed during operation. Accordingly, the voice recognition function may maintain a standby state (inactive state), and may be switched to an active state when a preset event occurs. Here, the preset event may be a case in which a user utters a voice corresponding to the keyword as described above, and may also be a user input (e.g., a touch input or a button input) for activating the voice recognition function.

Meanwhile, the voice recognition model to be activated may be implemented by the electronic apparatus 100, or may be implemented by an external apparatus. Accordingly, when the voice recognition model is implemented by the external apparatus, the processor 130 may activate the voice recognition function of the external apparatus by transmitting, through the communication interface 140, a request for activating the voice recognition function to the external apparatus.

Meanwhile, as described above, at least one among the character identifier 1110, the voice encoder 1120, and the text encoder 1130 may include a neural network, and thus may be trained based on training data.

For example, the processor 130 may train the character identifier 1110 to identify characters included in an input voice signal by using a loss value corresponding to the first score. In addition, the processor 130 may train at least one of the voice encoder 1120 or the text encoder 1130 such that the voice feature vector output by the voice encoder 1120 and the text feature vector output by the text encoder 1130 become similar by using a loss value corresponding to the second score.

In addition, the processor 130 may obtain a loss value based on the first score and the second score, and may jointly train at least one among the character identifier 1110, the voice encoder 1120, and the text encoder 1130 based on the obtained loss value. When supervised learning is used as a training method, the pre-registered keyword may be used as a label.

According to the embodiments described above with reference to FIGS. 1 and 2, the electronic apparatus 100 may detect a keyword for activating the voice recognition function in an effective and efficient manner. Specifically, even when a user registers a keyword through text input, the electronic apparatus 100 may effectively compare the registered keyword with a user voice received in real time, and may efficiently detect the keyword by processing one frame at a time in real time according to a streaming method.

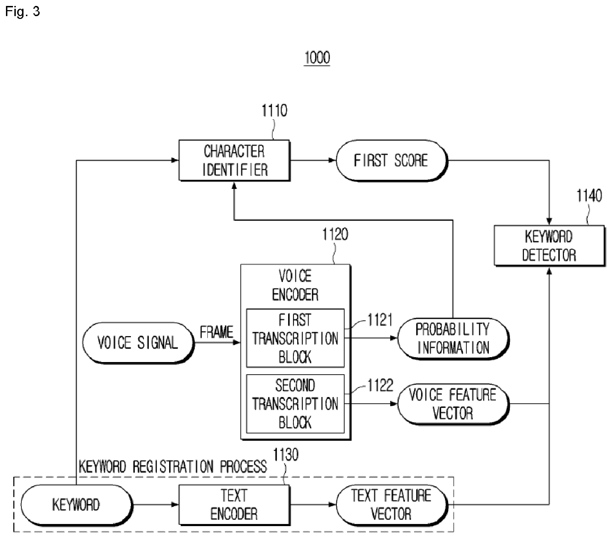

FIG. 3 is a view illustrating a plurality of modules according to one or more embodiments.

In the description of FIG. 2 above, various embodiments have been described on the assumption of a structure of the plurality of modules as illustrated in FIG. 2. Specifically, in the description of FIG. 2, embodiments have been described in which, when frames included in a voice signal are input into the character identifier 1110, the character identifier 1110 obtains a first score indicating a probability that the voice signal corresponds to a pre-registered keyword, and when the frames included in the voice signal are input into the voice encoder 1120, the voice encoder 1120 obtains a voice feature vector indicating a feature of the voice signal. However, the structure illustrated in FIG. 2 is merely an example, and structures and operations of the plurality of modules may vary according to embodiments.

As illustrated in FIG. 3, the voice encoder 1120 may include a first transcription block 1121 and a second transcription block 1122. Here, the first transcription block 1121 may output probability information corresponding to an input frame. Here, the "probability information" refers to information regarding probabilities that each of the input frames corresponds to each of a plurality of characters included in the keyword. When probability information for respective frames is obtained through the first transcription block 1121, the processor 130 may input the probability information for the respective frames into the character identifier 1110 to obtain the first score.

In other words, in the description of FIG. 2, the character identifier 1110 has been described as receiving each of the frames, obtaining probability information for the respective frames, and obtaining the first score based on the obtained probability information. However, as illustrated in FIG. 3, a process of receiving each of the frames and obtaining probability information for the respective frames may also be performed through the first transcription block 1121 included in the voice encoder 1120.

Meanwhile, the second transcription block 1122 may output a voice feature vector (that is, a first voice feature vector) corresponding to an input frame. In other words, an operation performed by the second transcription block 1122 of FIG. 3 may be identical to the operation described as being performed by the audio encoder of FIG. 2.

Since operations of the text encoder 1130 and the keyword detector 1140 are identical to those described above with reference to FIG. 2, repeated descriptions thereof are omitted. As long as a structure is capable of implementing various embodiments according to the present disclosure, structures of the plurality of modules may vary in addition to the structures of FIG. 2 or FIG. 3.

FIG. **4** is a view provided to explain in detail a process of obtaining a first score and a second score according to one or more embodiments.

According to one or more embodiments, the character identifier 1110 may obtain probability information regarding probabilities that respective input frames correspond to each of a plurality of characters included in a keyword. The probability information in FIG. 4 indicates frame-by-frame probability information output by the character identifier 1110 or the voice encoder 1120.

The character identifier 1110 may identify, based on the obtained probability information, characters having highest probabilities of corresponding to respective frames among the plurality of characters for each of the input frames. In addition, the character identifier 1110 may obtain a first score by accumulating probabilities corresponding to the identified characters. More specifically, the character identifier 1110 may identify characters having highest probabilities of corresponding to respective frames among the plurality of characters for each of the frames by updating, based on the probability information, information regarding probabilities that frames input up to a current time among the frames include a frame corresponding to each of the plurality of characters.

For example, the processor 130 may obtain an optimal Connectionist Temporal Classification (CTC) score ending at a current time T by using a CTC algorithm through the character identifier 1110, and in this case, the CTC score may be the first score according to the present disclosure. Hereinafter, a process of obtaining the first score by using the CTC algorithm is described.

Reference numeral 410 of FIG. 4 illustrates probability information, and 1, 2, 3, 4, 5, ... , T-1, and T on a horizontal axis indicate orders (times) in which respective frames are received. A vertical axis indicates predefined tokens, among which <pad> indicates a token for matching a length of a sequence. "C," "A," and "T" indicate each of a plurality of characters included in a keyword when a pre-registered keyword is "CAT." Filled circles corresponding to each of the characters "C," "A," and "T" indicate probabilities that respective frames correspond to each of "C," "A," and "T," and empty circles indicate blank tokens representing transitions between characters. The blank token may indicate that a character corresponding to a previous token has been continuously uttered. In addition, a graph of reference numeral 410 of FIG. 4 indicates a result of connecting tokens having highest probabilities of corresponding to respective frames.

Referring to reference numeral 410 of FIG. 4, the character identifier 1110 may identify that sixth to seventh frames have highest probabilities of corresponding to the character "C," eighth to eleventh frames have highest probabilities of corresponding to the character "A," and twelfth to thirteenth frames have highest probabilities of corresponding to the character "T."

The character identifier 1110 may obtain a CTC score, that is, the first score, by accumulating probabilities that the sixth to seventh frames correspond to the character "C," probabilities that the eighth to eleventh frames correspond to the character "A," and probabilities that the twelfth to thirteenth frames correspond to the character "T." Accordingly, the character identifier 1110 may obtain the first score indicating a probability that the voice signal corresponds to the pre-registered keyword at the current time T.

Reference numeral 420 of FIG. 4 illustrates a structure of data updated whenever probability information as illustrated in reference numeral 410 of FIG. 4 is obtained for each frame. In other words, reference numerals 410 and 420 of FIG. 4 illustrate the same example expanded along a time axis and illustrated as a data structure, respectively.

Specifically, circles of reference numeral 420 of FIG. 4 indicate states of data corresponding to respective tokens indicated on the vertical axis of reference numeral 410 of FIG. 4. In addition, arrows of reference numeral 420 of FIG. 4 indicate that respective states may recur to themselves or proceed to next states. The character identifier 1110 may update all states whenever each of the frames is input. Specifically, the character identifier 1110 may update data corresponding to the states based on a greatest CTC score among CTC scores corresponding to arrows entering the respective states. Accordingly, all states may indicate probabilities that frames input up to a current time correspond to tokens of corresponding states.

When frames up to the seventh frame of reference numeral 410 of FIG. 4 are input, a C state may store a score indicating a probability that frames input up to a current time correspond to the character "C," a time at which a frame corresponding to the character "C" starts to be input (that is, a time corresponding to the sixth frame in reference numeral 410 of FIG. 4), and a combination of first voice feature vectors corresponding to the character "C" (that is, a second voice feature vector corresponding to "C" in FIG. 4).

Meanwhile, until the seventh frame of reference numeral 410 of FIG. 4 is input, an A state and a T state are also updated, but since frames corresponding to the characters "A" and "T" have not yet been input, scores of the A state and the T state may be very low.

When the eighth frame of reference numeral 410 of FIG. 4 is input, information stored in the C state may be copied to the A state, and the A state may store a score indicating a probability that the eighth frame corresponds to the character "A," a time at which a frame corresponding to the character "A" starts to be input (that is, a time corresponding to the eighth frame in reference numeral 420 of FIG. 4), and a first voice feature vector corresponding to the eighth frame.

When the ninth frame of reference numeral 410 of FIG. 4 is input, the A state may store a combination of a score indicating a probability that the eighth frame corresponds to the character "A" and a score indicating a probability that the ninth frame corresponds to the character "A." Here, the combination of scores indicating probabilities may be performed by calculating a sum of log probabilities, and may also be performed according to various other operations. Thereafter, the A state may store a combination of the first voice feature vector corresponding to the eighth frame and the first voice feature vector corresponding to the ninth frame (that is, a second voice feature vector corresponding to "A" in FIG. 4).

When the above-described method is repeatedly performed until a frame corresponding to the current time T of reference numeral 410 of FIG. 4 is input, the T state may store a score corresponding to an entire keyword including the characters "C," "A," and "T" up to the current time T (that is, the first score), times at which each of the characters "C," "A," and "T" start to be input, and a second voice feature vector corresponding to each of the characters "C," "A," and "T."

According to the above-described embodiments, the character identifier 1110 may obtain a score corresponding to an entire keyword (that is, the first score) and identify CTC alignment while identifying characters having highest probabilities of corresponding to respective frames according to a streaming manner for each input frame. In addition, the character identifier 1110 may obtain a plurality of second voice feature vectors corresponding to each of a plurality of characters included in the keyword according to the CTC alignment.

In the above description, a process of obtaining the first score has been described, and hereinafter, a process of obtaining the second score will be described.

According to one or more embodiments, the keyword detector 1140 may obtain one voice feature vector by combining a plurality of first voice feature vectors, obtain one text feature vector corresponding to a keyword by combining a plurality of character feature vectors, and obtain a second score by comparing the one voice feature vector with the one text feature vector.

According to another embodiment, the keyword detector 1140 may obtain the second score by comparing a plurality of second voice feature vectors (that is, character-level voice feature vectors) with a plurality of character feature vectors (that is, character-level text feature vectors) for corresponding characters.

For example, the keyword detector 1140 may calculate a first similarity value by comparing a second voice feature vector corresponding to the character "C" and a character feature vector indicating a feature of the character "C," may calculate a second similarity value by comparing a second voice feature vector corresponding to the character "A" and a character feature vector indicating a feature of the character "A," and may calculate a third similarity value by comparing a second voice feature vector corresponding to the character "T" and a character feature vector indicating a feature of the character "T." In addition, the keyword detector 1140 may obtain the second score by performing an operation such as a sum or a weighted sum based on the first similarity value, the second similarity value, and the third similarity value.

When the second score is obtained by comparing character-level voice feature vectors with a plurality of character feature vectors for corresponding characters, voice feature vectors of frames corresponding to noise, such as first to third frames of reference numeral 410 of FIG. 4, may be excluded, and whether characters correspond to each other may be identified for respective characters, thereby further improving accuracy of keyword detection.

Meanwhile, the keyword detector 1140 may also obtain the second score by combining a score according to a result of comparing one voice feature vector with one text feature vector and a score according to a result of comparing character-level voice feature vectors with a plurality of character feature vectors for corresponding characters.

According to the embodiments described above, the electronic apparatus 100 may obtain, in a streaming manner, an optimal CTC score (first score) ending at a current time T and CTC alignment, obtain a similarity score (second score) by comparing voice feature vectors with character feature vectors on a character basis using not only the CTC score but also the CTC alignment, and perform keyword detection using both the first score and the second score. Accordingly, the electronic apparatus 100 may detect a keyword for activating a voice recognition function in an effective and efficient manner.

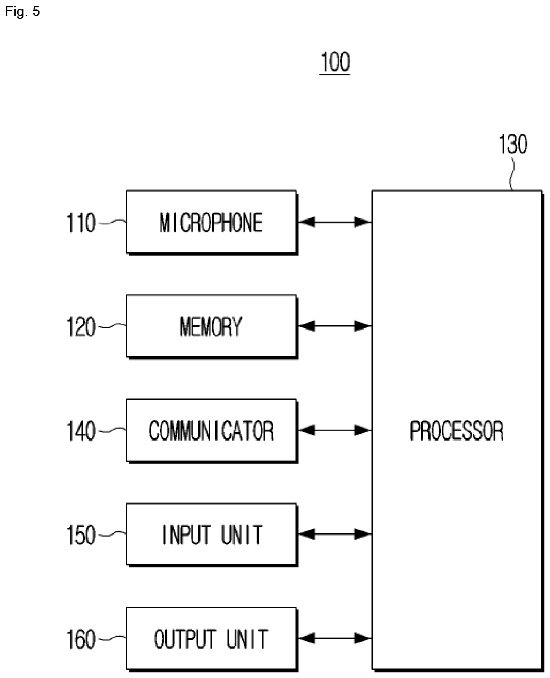

FIG. 5 is a view illustrating in detail a configuration of the electronic apparatus 100 according to one or more embodiments.

As illustrated in FIG. 5, the electronic apparatus 100 may further include a communication interface 140, an input unit 150, and an output unit 160, in addition to the microphone 110, the memory 120, and the processor 130. However, configurations illustrated in FIGS. 1 and 5 are merely illustrative, and it is obvious that, in implementing the present disclosure, new configurations may be added or some configurations may be omitted in addition to the configurations illustrated in FIGS. 1 and 5.

The communication interface 140 includes circuitry, and may perform communication with an external apparatus. Specifically, the processor 130 may receive various data or information from the external apparatus connected through the communication interface 140, and may also transmit various data or information to the external apparatus.

The communication interface 140 may include at least one among a Wi-Fi module, a Bluetooth module, a wireless communication module, an NFC module, and an Ultra-Wide Band (UWB) module. Specifically, the Wi-Fi module and the Bluetooth module may perform communication according to a Wi-Fi scheme and a Bluetooth scheme, respectively. When the Wi-Fi module or the Bluetooth module is used, various connection information such as SSID may first be transmitted and received, and communication connection may then be established using the connection information to transmit and receive various information.

In addition, the wireless communication module may perform communication according to various communication standards such as IEEE, Zigbee, 3G (3rd Generation), 3GPP (3rd Generation Partnership Project), LTE (Long Term Evolution), and 5G (5th Generation). In addition, the NFC module may perform communication according to an NFC (Near Field Communication) scheme using a 13.56 MHz band among various RF-ID frequency bands such as 135 kHz, 13.56 MHz, 433 MHz, 860 to 960 MHz, and 2.45 GHz. In addition, the UWB module may accurately measure a Time of Arrival (ToA), which is a time at which a pulse reaches a target object, and an Angle of Arrival (AoA), which is an arrival angle of the pulse at a transmitting apparatus, through communication between UWB antennas, and accordingly, precise distance and position recognition within an error range of several tens of centimeters indoors is possible.

According to one or more embodiments, when at least some of the plurality of modules are implemented by an external apparatus or a voice recognition model is implemented by the external apparatus, the processor 130 may control the communication interface 140 to transmit at least some of various information/data such as a pre-registered keyword, a feature vector indicating a feature of the keyword, a voice signal and frames of the voice signal, a voice feature vector, a text feature vector, a first score, or a second score to the external apparatus. In addition, the processor 130 may receive, through the communication interface 140, at least some of various information/data such as a pre-registered keyword, a feature vector indicating a feature of the keyword, a voice signal and frames of the voice signal, a voice feature vector, a text feature vector, a first score, or a second score from the external apparatus.

The input unit 150 includes circuitry, and the processor 130 may receive, through the input unit 150, a user command for controlling an operation of the electronic apparatus 100. Specifically, the input unit 150 may comprise configurations such as the microphone 110, a camera, and a remote-control signal receiver. In addition, the input unit 150 may be implemented in a form included in a display as a touch screen. In particular, the microphone 110 may receive a voice signal and convert the received voice signal into an electrical signal.

According to one or more embodiments, the processor 130 may receive, through the input unit 150, a user input for inputting text corresponding to the keyword. In addition, the processor 130 may receive, through the input unit 150, a user input (e.g., a touch input or a button input) for activating the voice recognition function.

The output unit 160 includes circuitry, and the processor 130 may output various functions executable by the electronic apparatus 100 through the output unit 160. In addition, the output unit 160 may include at least one of a display, a speaker, or an indicator.

The display may output image data under control of the processor 130. Specifically, the display may output an image pre-stored in the memory 120 under control of the processor 130. In particular, the display according to one or more embodiments of the present disclosure may also display a User Interface (UI) stored in the memory 120. The display may be implemented as a Liquid Crystal Display Panel (LCD), Organic Light Emitting Diodes (OLED), or the like, and may also be implemented as a flexible display or a transparent display according to circumstances. However, the display according to the present disclosure is not limited to a specific type.

The speaker may output audio data under control of the processor 130. The indicator may be turned on under control of the processor 130. Specifically, the indicator may be turned on in various colors under control of the processor 130. For example, the indicator may be implemented as a Light Emitting Diode (LED), a Liquid Crystal Display Panel (LCD), a Vacuum Fluorescent Display (VFD), or the like, but is not limited thereto.

According to one or more embodiments, when it is identified that the voice signal includes the pre-registered keyword, the processor 130 may control the output unit 160 to output a message indicating that the voice signal has been identified as including the keyword.

Meanwhile, when a weighted sum obtained based on the first score and the second score is less than a first threshold value preset as a criterion indicating that the voice signal includes the keyword, but is greater than or equal to a second threshold value preset to be lower than the first threshold value, the processor 130 may identify that whether the voice signal includes the keyword is unclear, and may control the output unit 160 to output a message requesting re-utterance to the user.

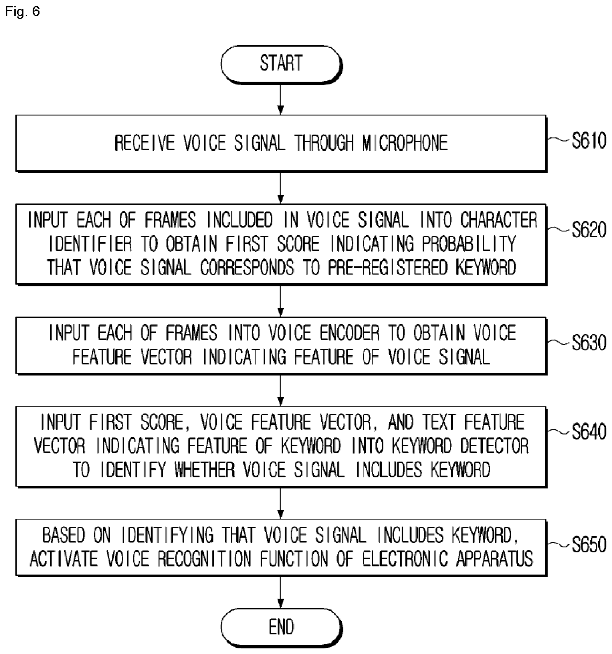

FIG. 6 is a flowchart illustrating a control method of the electronic apparatus 100 according to one or more embodiments.

As illustrated in FIG. 6, the electronic apparatus 100 may receive a voice signal through the microphone 110 (S610). When a user utters a voice, the electronic apparatus 100 may receive a voice signal corresponding to the uttered voice through the microphone 110 in units of frames.

The electronic apparatus 100 may input respective frames included in the voice signal into the character identifier 1110, and obtain a first score indicating a probability that the voice signal corresponds to a pre-registered keyword (S620). Specifically, the electronic apparatus 100 may obtain probability information regarding probabilities that each of the input frames corresponds to each of a plurality of characters included in the keyword, and may obtain the first score based on the obtained probability information.

The electronic apparatus 100 may input respective frames into the voice encoder 1120, and obtain a voice feature vector indicating a feature of the voice signal (S630). Specifically, the electronic apparatus 100 may obtain a plurality of first voice feature vectors by obtaining, whenever respective frames are input, first voice feature vectors indicating features of the respective frames.

The electronic apparatus 100 may identify whether the voice signal includes the keyword by inputting the first score, the voice feature vector, and a text feature vector indicating a feature of the keyword into the keyword detector 1140 (S640).

The electronic apparatus 100 may obtain a plurality of character feature vectors (that is, character-level text feature vectors) indicating features of respective characters included in the keyword, and may also obtain one text feature vector indicating a feature of the entirety of the keyword.

The electronic apparatus 100 may identify whether the voice signal includes the keyword by using the first score, the voice feature vector, and the text feature vector together, and may output an identification result.

The electronic apparatus 100 may obtain a second score indicating similarity between the voice feature vector and the text feature vector. The electronic apparatus 100 may identify whether the voice signal includes the keyword based on the first score and the second score.

For example, the electronic apparatus 100 may obtain a weighted sum of the first score and the second score, and when the obtained weighted sum is greater than or equal to a preset threshold value, may identify that the voice signal includes the keyword. On the other hand, when the obtained weighted sum is less than the preset threshold value, the electronic apparatus 100 may identify that the voice signal does not include the keyword.

When it is identified that the voice signal includes the keyword, the electronic apparatus 100 may activate a voice recognition function of the electronic apparatus 100 (S650). On the other hand, when it is identified that the voice signal does not include the keyword, the electronic apparatus 100 may maintain a state in which the voice recognition function is not activated.

Meanwhile, the control method of the electronic apparatus 100 according to the above-described embodiments may be implemented as a program and provided to the electronic apparatus 100. In particular, a program including the control method of the electronic apparatus 100 may be stored in a non-transitory computer readable medium and provided.

Specifically, in a non-transitory computer readable recording medium including a program for executing the control method of the electronic apparatus 100, the control method of the electronic apparatus 100 may include obtaining, when a voice signal is received through the microphone 110, a first score indicating a probability that the voice signal corresponds to a pre-registered keyword by inputting respective frames included in the voice signal into the character identifier 1110, obtaining a voice feature vector indicating a feature of the voice signal by inputting the respective frames into the voice encoder 1120, identifying whether the voice signal includes the keyword by inputting the first score, the voice feature vector, and a text feature vector indicating a feature of the keyword into the keyword detector 1140, and activating a voice recognition function of the electronic apparatus 100 when it is identified that the voice signal includes the keyword.

Although the control method of the electronic apparatus 100 and the computer readable recording medium including a program for executing the control method of the electronic apparatus 100 have been briefly described above, this is merely for omitting redundant descriptions, and it is obvious that various embodiments regarding the electronic apparatus 100 may also be applied to the control method of the electronic apparatus 100 and the computer readable recording medium including a program for executing the control method of the electronic apparatus 100.

A function related to artificial intelligence according to the present disclosure may operate through the processor 130 and the memory 120 of the electronic apparatus 100.

The processor 130 may comprise one processor or a plurality of processors. In this case, the one processor or the plurality of processors 130 may include at least one of a Central Processing Unit (CPU), a Graphic Processing Unit (GPU), or a Neural Processing Unit (NPU), but is not limited to the examples of the processor 130 described above.

The CPU is a general-purpose processor 130 capable of performing not only general operations but also artificial intelligence operations, and may efficiently execute complex programs through a multi-layer cache structure. The CPU is advantageous for a serial processing scheme that enables organic linkage between a previous calculation result and a subsequent calculation result through sequential calculations. The general-purpose processor 130 is not limited to the above-described examples except where specifically indicated as the above-described CPU.

The GPU is a processor 130 for large-scale operations such as floating-point operations used for graphic processing, and may perform large-scale operations in parallel by integrating a large number of cores. In particular, the GPU may be advantageous for a parallel processing scheme such as a convolution operation compared to the CPU. In addition, the GPU may be used as a co-processor 130 for supplementing functions of the CPU. The processor 130 for large-scale operations is not limited to the above-described examples except where specifically indicated as the above-described GPU.

The NPU is a processor 130 specialized for artificial intelligence operations using an artificial neural network, and respective layers constituting the artificial neural network may be implemented in hardware (e.g., silicon). In this case, since the NPU is specially designed according to required specifications of a manufacturer, a degree of freedom thereof may be lower than that of the CPU or GPU, but artificial intelligence operations required by the manufacturer may be efficiently processed. Meanwhile, as a processor 130 specialized for artificial intelligence operations, the NPU may be implemented in various forms such as a Tensor Processing Unit (TPU), an Intelligence Processing Unit (IPU), and a Vision Processing Unit (VPU). The artificial intelligence processor 130 is not limited to the above-described examples except where specifically indicated as the above-described NPU.

In addition, the one processor or the plurality of processors 130 may be implemented as a System on Chip (SoC). In this case, the SoC may further include, in addition to the one processor or the plurality of processors 130, memory 120 and a network interface such as a bus for data communication between the processor 130 and the memory 120.

When the SoC included in the electronic apparatus 100 includes a plurality of processors 130, the electronic apparatus 100 may perform operations related to artificial intelligence (e.g., operations related to learning or inference of an artificial intelligence model) by using some of the plurality of processors 130. For example, the electronic apparatus 100 may perform operations related to artificial intelligence by using at least one among a GPU, an NPU, a VPU, a TPU, and a hardware accelerator specialized for artificial intelligence operations such as convolution operations and matrix multiplication operations among the plurality of processors 130. However, this is merely one embodiment, and operations related to artificial intelligence may of course be processed by using a general-purpose processor 130 such as a CPU.

In addition, the electronic apparatus 100 may perform operations for functions related to artificial intelligence by using multi-cores (e.g., dual cores or quad cores) included in one processor 130. In particular, the electronic apparatus 100 may perform artificial intelligence operations such as convolution operations and matrix multiplication operations in parallel by using the multi-cores included in the processor 130.

The one processor or the plurality of processors 130 controls processing of input data according to predefined operation rules or an artificial intelligence model stored in the memory 120. The predefined operation rules or the artificial intelligence model are characterized as being generated through learning.

Here, being generated through learning means that predefined operation rules or an artificial intelligence model having desired characteristics are generated by applying a learning algorithm to a plurality of training data. Such learning may be performed in a device itself in which artificial intelligence according to the present disclosure is performed, or may be performed through a separate server/system.

The artificial intelligence model may include a plurality of neural network layers. At least one layer has at least one weight value, and performs an operation of the layer through an operation result of a previous layer and at least one defined operation. Examples of the neural network include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep Q-Network, and a Transformer, and the neural network according to the present disclosure is not limited to the above-described examples except where specifically indicated.

The learning algorithm is a method for training a predetermined target device (e.g., a robot) using a plurality of training data such that the predetermined target device itself may make a determination or prediction. Examples of the learning algorithm include supervised learning, unsupervised learning, semi-supervised learning, and reinforcement learning, and the learning algorithm according to the present disclosure is not limited to the above-described examples except where specifically indicated.

A machine-readable storage medium may be provided in the form of a non-transitory storage medium. Here, the "non-transitory storage medium" means only that the storage medium is a tangible device and does not include a signal (e.g., an electromagnetic wave), and this term does not distinguish between a case in which data is semi-permanently stored in the storage medium and a case in which data is temporarily stored therein. For example, the "non-transitory storage medium" may include a buffer in which data is temporarily stored.

According to one or more embodiments, methods according to various embodiments disclosed herein may be provided as included in a computer program product. The computer program product may be traded between a seller and a purchaser as a commodity. The computer program product may be distributed in the form of a machine-readable storage medium (e.g., a compact disc read only memory (CD-ROM)), or may be distributed online (e.g., downloaded or uploaded) directly between two user devices (e.g., smartphones) or through an application store (e.g., Play Store^{™}). In the case of online distribution, at least a portion of the computer program product (e.g., a downloadable app) may be at least temporarily stored or temporarily generated in a machine-readable storage medium such as memory 120 of a server of a manufacturer, a server of the application store, or a relay server.

As described above, each of components (e.g., modules or programs) according to various embodiments of the present disclosure may include a singular entity or a plurality of entities, and some sub-components among the above-described corresponding sub-components may be omitted, or other sub-components may be further included in various embodiments. Alternatively or additionally, some components (e.g., modules or programs) may be integrated into one entity and may perform functions performed by respective corresponding components before integration in the same or similar manner.

Operations performed by modules, programs, or other components according to various embodiments may be executed sequentially, in parallel, repetitively, or heuristically, or at least some operations may be executed in a different order, omitted, or additional operations may be added.

Meanwhile, the term "unit" or "module" used in the present disclosure includes a unit composed of hardware, software, or firmware, and may be interchangeably used with terms such as logic, a logic block, a component, or a circuit. A "unit" or "module" may be an integrally configured component or a minimum unit or part thereof that performs one or more functions. For example, a module may be configured as an application-specific integrated circuit (ASIC).

Various embodiments of the present disclosure may be implemented as software including instructions stored in a machine-readable storage medium readable by a machine (e.g., a computer). The machine may include an electronic apparatus (e.g., the electronic apparatus 100) according to the disclosed embodiments as a device capable of calling stored instructions from the storage medium and operating according to the called instructions.

When the instructions are executed by a processor, the processor may directly perform functions corresponding to the instructions or may perform the functions by using other components under control of the processor. The instructions may include code generated or executed by a compiler or an interpreter.

Although preferred embodiments of the present disclosure have been illustrated and described above, the present disclosure is not limited to the above-described specific embodiments, and various modifications may of course be made by those skilled in the art to which the present disclosure pertains without departing from the gist of the present disclosure claimed in the claims, and such modified embodiments should not be individually understood apart from the technical spirit or prospect of the present disclosure.

## Claims

1. A electronic apparatus comprising:
a microphone;
memory 120 storing at least one instruction; and
a processor configured to execute the at least one instruction,
wherein the processor is configured to:
based on a voice signal being received through the microphone, input each of frames included in the voice signal into a character identifier to obtain a first score indicating a probability that the voice signal corresponds to a pre-registered keyword;
input each of the frames into a voice encoder to obtain a voice feature vector indicating a feature of the voice signal;
input the first score, the voice feature vector, and a text feature vector indicating a feature of the keyword into a keyword detector to identify whether the voice signal includes the keyword; and based on identifying that the voice signal includes the keyword, activate a voice recognition function of the electronic apparatus.

2. The electronic apparatus of claim 1, wherein the processor is configured to:
based on receiving a user input for inputting text corresponding to the keyword, input the text into a text encoder to obtain the text feature vector; and
store the text feature vector in the memory 120.

3. The electronic apparatus of claim 2, wherein the processor is configured to input each of the frames into the character identifier and the voice encoder whenever each of the frames is received; and
wherein the character identifier is configured to:
obtain probability information regarding probabilities that each of the frames corresponds to each of a plurality of characters included in the keyword;
identify, based on the probability information, characters having highest probabilities of corresponding to the respective frames among the plurality of characters for each of the frames; and
obtain the first score by accumulating probabilities corresponding to the identified characters.

4. The electronic apparatus of claim 3, wherein the character identifier is configured to identify, for each of the frames, characters having highest probabilities of corresponding to the respective frames among the plurality of characters by updating, based on the probability information, information regarding probabilities that frames input up to a current time among the frames include a frame corresponding to each of the plurality of characters.

5. The electronic apparatus of claim 4, wherein the voice feature vector includes a plurality of first voice feature vectors indicating features of the respective frames and a plurality of second voice feature vectors indicating features of the respective identified characters; and
wherein the voice encoder is configured to obtain the plurality of first voice feature vectors by obtaining, whenever each of the frames is input, the first voice feature vector indicating a feature of each of the frames.

6. The electronic apparatus of claim 5, wherein the keyword detector is configured to:
obtain a second score indicating similarity between the voice feature vector and the text feature vector;
obtain a weighted sum of the first score and the second score; and
based on the weighted sum being greater than or equal to a preset threshold value, identify that the voice signal includes the keyword.

7. The electronic apparatus of claim 6, wherein the keyword detector is configured to obtain a plurality of second voice feature vectors by combining, among the plurality of first voice feature vectors, first voice feature vectors for which the identified characters are identical, based on information regarding the identified characters and information regarding times at which the respective frames are received.

8. The electronic apparatus of claim 7, wherein the text feature vector includes a plurality of character feature vectors indicating a features of each of the plurality of characters; and
wherein the keyword detector is configured to obtain the second score by comparing the plurality of second voice feature vectors with the plurality of character feature vectors for corresponding characters.

9. The electronic apparatus of claim 7, wherein each of the character identifier, the voice encoder, and the text encoder includes a plurality of neural networks; and
wherein the processor is configured to:
obtain a loss value based on the first score and the second score; and
train at least one of the character identifier, the voice encoder, or the text encoder based on the loss value.

10. The electronic apparatus of claim 1, wherein a size of each of the frames is determined within a range of 20 ms to 40 ms.

11. A control method of an electronic apparatus, comprising:
based on a voice signal being received through a microphone, inputting each of frames included in the voice signal into a character identifier to obtain a first score indicating a probability that the voice signal corresponds to a pre-registered keyword;
inputting each of the frames into a voice encoder to obtain a voice feature vector indicating a feature of the voice signal;
inputting the first score, the voice feature vector, and a text feature vector indicating a feature of the keyword into a keyword detector to identify whether the voice signal includes the keyword; and
based on identifying that the voice signal includes the keyword, activating a voice recognition function of the electronic apparatus.

12. The method of claim 11, further comprising:
based on receiving a user input for inputting text corresponding to the keyword, inputting the text into a text encoder to obtain the text feature vector; and
storing the text feature vector in the memory 120.

13. The method of claim 12, wherein the obtaining a first score comprises inputting each of the frames into the character identifier whenever each of the frames is received;
wherein the obtaining a voice feature vector comprises inputting each of the frames into the voice encoder whenever each of the frames is received;
wherein the character identifier is configured to:
obtain probability information regarding probabilities that each of the frames corresponds to each of a plurality of characters included in the keyword;
identify, based on the probability information, characters having highest probabilities of corresponding to the respective frames among the plurality of characters for each of the frames; and
obtain the first score by accumulating probabilities corresponding to the identified characters.

14. The method of claim 13, wherein the character identifier is configured to identify, for each of the frames, characters having highest probabilities of corresponding to the respective frames among the plurality of characters by updating, based on the probability information, information regarding probabilities that frames input up to a current time among the frames include a frame corresponding to each of the plurality of characters.

15. The method of claim 14, wherein the voice feature vector includes a plurality of first voice feature vectors indicating features of the respective frames and a plurality of second voice feature vectors indicating features of the respective identified characters; and
wherein the voice encoder is configured to obtain the plurality of first voice feature vectors by obtaining, whenever each of the frames is input, the first voice feature vector indicating a feature of each of the frames.
